# FASCICULE DE BREVET EUROPEEN

(11) **EP 1 766 337 B1**
(45) Date de publication et mention de la délivrance du brevet: **22.06.2016**
(21) Numéro de dépôt: 05757863.5
(22) Date de dépôt: 19.04.2005
(51) Int. Cl.: G01D 13/22, B60Q 3/04, B60K 37/02

(54) **INDICATEUR DE TABLEAU DE BORD A AIGUILLE MONOBLOC REPLIEE VISIBLE EN PERIPHERIE DE CADRAN**
ARMATURENBRETTANZEIGE MIT ZURÜCKGEFALTETEM MONOBLOCK-ZEIGER, SICHTBAR AN DER PERIPHERIE DES ZIFFERBLATTS
PANEL INDICATOR WITH BACK-FOLDED SINGLE-PIECE NEEDLE VISIBLE IN DIAL PERIPHERY

(30) Priorité: 11.06.2004 FR 0406308
(43) Date de publication de la demande: 28.03.2007
(73) Titulaire: Johnson Controls Technology Company, Holland, MI 49423 (US)
(72) Inventeur: FOURNIER, Joël, F-95000 Cergy (FR)
(74) Mandataire: Wolff, Felix
(86) Numéro de dépôt international: PCT/FR2005/000937
(87) Numéro de publication internationale: WO 2006/005820

(56) Documents cités:
- EP-A- 1 132 721
- JP-A- 2003 014 508
- US-A1- 2003 202 335
- US-B1- 6 224 222

## Description

Le domaine de l'invention est celui des indicateurs de tableau de bord de véhicule automobile ou autre engin de locomotion.

Un indicateur comporte un mouvement, une aiguille indicatrice, entraînée en rotation par le mouvement devant un cadran portant des caractères d'indication (des graduations et des nombres, notamment), le tout monté dans un réhaut d'habillage servant aussi de protection et de cache extérieur au cadran. Un tel indicateur est connu, par exemple, du document JP 2003 014508 .

La demanderesse a cherché à développer un indicateur à aiguille seulement visible en périphérie de cadran et qui soit bon marché.

C'est ainsi que la demanderesse propose son invention qui concerne un indicateur de tableau de bord comme défini dans la revendication 1.

De préférence, l'indicateur est monté dans un réhaut, sur lequel est fixée une vitre de protection s'étendant à l'avant du cadran.

De préférence toujours, le bras d'aiguille, formant guide de lumière, comporte, dans une zone proche de l'axe, au moins un pan incliné d'entrée de lumière.

Avantageusement, les moyens d'éclairage comprennent des diodes électroluminescentes (LED).

L'éclairage de l'aiguille et du cadran est ainsi facile et bon marché à réaliser.

L'invention sera mieux comprise à l'aide de la description suivante de la forme de réalisation préférée de l'indicateur de l'invention, en référence au dessin annexé, sur lequel
- la figure 1 représente une vue en coupe de l'indicateur et
- la figure 2 représente une vue en plan du cadran de l'indicateur.

On notera que l'indicateur 1 qui va maintenant être décrit fait partie d'un ensemble d'indicateurs plus vaste intégré à un tableau de bord 2 comportant un fond arrière 3 et une vitre de protection avant 4 tenue dans un réhaut d'habillage 5 servant aussi de protection et ici de cache extérieur pour le cadran de l'indicateur 1 et certains autres.

Entre la vitre de protection 4 et le fond arrière 3 s'étend une carte de circuit imprimé 6, à l'arrière de laquelle est monté le mouvement moteur 7 de l'indicateur. Le moteur 7 porte un axe 8 traversant la carte 6 et sur lequel est emmanché un moyeu 9 d'une aiguille indicatrice monobloc 10. L'aiguille 10 comporte un bras 11, s'étendant parallèlement à la carte 6, et qui est deux fois coudé à angle droit pour se terminer par une extrémité indicatrice 12 s'étendant aussi parallèlement à la carte 6, repliée vers l'axe 8 du moteur. L'aiguille 10 est dans un matériau conducteur de la lumière et aussi transparent à la lumière.

Autour de l'axe 8 du moteur 7 d'entraînement en rotation de l'aiguille 10, sont montées sur la carte 6 une pluralité de diodes leds d'éclairage 13, en l'espèce quatre.

La partie du bras d'aiguille 11 s'étendant de part et d'autre du moyeu 9 comporte, à son extrémité libre, un premier pan incliné externe 14 d'entrée de lumière, pour réfléchir dans l'aiguille, c'est-à-dire dans son bras 11 et son extrémité indicatrice 12, la lumière d'une des diodes 13. De l'autre côté de la portion de bras, par rapport au moyeu, il est ménagé un deuxième pan incliné interne 15 d'entrée de lumière, pour également réfléchir la lumière d'une des diodes 13 dans le bras 11. Du fait de la transparence du bras d'aiguille 11, ces deux zones, où sont ménagés les pans inclinés d'entrée de lumière 14, 15, laissent également la lumière des diodes 13 les traverser pour assurer un éclairage indirect du cadran, comme développé ci-après, alors que ces diodes 13 assurent un éclairage direct de l'aiguille 10.

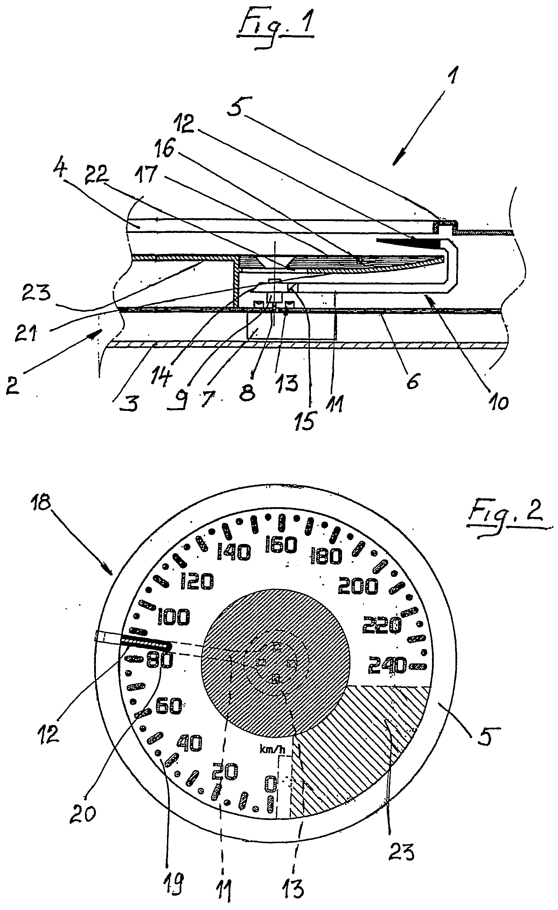

Entre le bras d'aiguille 11 et l'extrémité indicatrice 12 s'étend une lentille guide de lumière 16 destinée à être éclairée de façon indirecte par les diodes 13 à travers le bras d'aiguille 11. La face antérieure 17 de la lentille 16 sert de face avant à l'indicateur portant le cadran 18 (figure 2) qui est un masque en lexan sur lequel ont été sérigraphiés, en l'occurrence, une échelle de comptage 19 et des valeurs de vitesse 20. La lentille 16 est disposée à l'avant d'une paroi de fond 21 servant de boîte à lumière, la paroi étant percée d'une fenêtre 22 au droit du moyeu d'aiguille 9 et de la zone des diodes 13 pour laisser passer la lumière des diodes 13. La paroi de fond 21 est adjacente à une autre partie de boîte à lumière 23 qui constitue aussi une zone de maintien mécanique de la lentille 16 et dans laquelle l'aiguille 10 ne peut pas se déplacer.

Quand le moteur 7 entraîne l'aiguille indicatrice 10 en rotation sur l'axe 8, l'extrémité indicatrice 12, qui est seule partie d'aiguille visible, le bras d'aiguille 11 étant caché par la lentille 16 et le cadran 18, est entraînée en translation circulaire à la périphérie du cadran 18, le long de l'échelle de comptage 19.

La nuit, quand les diodes 13 sont allumées, l'extrémité indicatrice 12 est parfaitement éclairée.

## Revendications

1. Indicateur de tableau de bord (2) comprenant une aiguille monobloc (10) montée rotative sur un axe (8) d'un moteur d'entraînement (7), l'aiguille (10) comportant un bras coudé (11) terminé par une extrémité indicatrice (12) repliée vers son axe (8) pour être entraînée en translation circulaire devant un cadran (18) disposé sur un conduit de lumière (16), le cadran (18) et le conduit de lumière (16) s'étendant entre l'extrémité indicatrice (12) et le bras (11) de l'aiguille (10), caché par le conduit (16) et le cadran (18),
des moyens d'éclairage (13) situés dans une zone proche de l'axe (8) étant prévus pour l'éclairage direct du bras (11) et de l'extrémité d'aiguille repliée (12),
**caractérisé en ce que**
le bras d'aiguille (11), formant guide de lumière, comporte, dans une zone proche de l'axe (8), un premier pan incliné externe (14) d'entrée de lumière, et un deuxième pan incliné interne (15) d'entrée de lumière,
lesdits pans inclinés (14, 15) réfléchissant la lumière d'au moins un des moyens d'éclairage (13),
-- la lumière d'au moins un des moyens d'éclairage (13) étant réfléchie, dû aux pans inclinés (14, 15), dans le bras d'aiguille (11) et son extrémité indicatrice (12), et
-- du fait de la transparence du bras d'aiguille, la lumière d'au moins un des moyens d'éclairage (13) traverse de bras d'aiguille (11) dans les zones, où sont ménagés les pans inclinés (14, 15), pour assurer un éclairage indirect du cadran (18).

2. Indicateur selon la revendication 1, dans lequel il est prévu un réhaut d'habillage (5) sur lequel est fixée une vitre de protection (4).

3. Indicateur selon l'une des revendications 1 ou 2, dans lequel les moyens d'éclairage comprennent des diodes électroluminescentes (13).

## Patentansprüche

1. Anzeige für Armaturenbrett (2), umfassend eine einstückige Zeigernadel (10), die auf einer Achse (8) eines Antriebsmotors (7) drehbar gelagert ist, wobei die Zeigernadel (10) einen gekröpften Arm (11) aufweist, der in einem Zeigerende (12) endet, das zu seiner Achse (8) hin zurückgefaltet ist, um vor einem Zifferblatt (18), das auf einem Lichtleiter (16) angeordnet ist, zur kreisförmigen Translation angetrieben zu werden, wobei das Zifferblatt (18) und der Lichtleiter (16) sich zwischen dem Zeigerende (12) und dem Arm (11) der Zeigernadel (10), der durch die Leitung (16) und das Zifferblatt (18) verdeckt ist, erstrecken, wobei Beleuchtungsmittel (13), die sich in einer Zone nahe der Achse (8) befinden, für die direkte Beleuchtung des Arms (11) und des zurückgefalteten Zeigernadelendes (12) vorgesehen sind,
**dadurch gekennzeichnet, dass**
der Zeigernadelarm (11), der eine Lichtführung bildet, in einer Zone nahe der Achse (8), eine außen liegende geneigte erste Fläche (14) für den Eintritt von Licht und eine innen liegende geneigte zweite Fläche (15) für den Eintritt von Licht aufweist,
wobei die geneigten Flächen (14, 15) das Licht mindestens eines der Beleuchtungsmittel (13) reflektieren,
- wobei das Licht mindestens eines der Beleuchtungsmittel (13) aufgrund der geneigten Flächen (14, 15) in den Zeigernadelarm (11) und sein Zeigerende (12) reflektiert wird, und
- aufgrund durch die Transparenz des Zeigernadelarms das Licht mindestens eines der Beleuchtungsmittel (13) den Zeigernadelarm (11) in den Zonen durchquert, wo die geneigten Flächen (14, 15) vorgesehen sind, um eine indirekte Beleuchtung des Zifferblattes (18) zu bewirken.

2. Anzeige nach Anspruch 1, wobei eine Verblendungserhöhung (5) vorgesehen ist, auf der eine Schutzscheibe (4) befestigt ist.

3. Anzeige nach einem der Ansprüche 1 oder 2, wobei die Beleuchtungsmittel Leuchtdioden (13) sind.

## Claims

1. Dashboard indicator (2) comprising a single-piece needle (10) rotatably mounted on a spindle (8) of a drive motor (7), the needle (10) comprising a bent arm (11) terminated by an indicating end (12) folded towards its spindle (8) in order to be driven in circular translation in front of a dial (18) disposed on a light duct (16), the dial (18) and the light duct (16) extending between the indicating end (12) and the arm (11) of the needle (10), concealed by the guide (16) and the dial (18), lighting means (13) located in a zone close to the spindle (8) being provided for direct illumination of the arm (11) and of the end of the folded needle (12),
**characterised in that**
the needle arm (11), forming a light guide, comprises, in a zone close to the spindle (8), a first, outer inclined face (14) for entry of light, and a second, inner inclined face (15) for entry of light,
said inclined faces (14, 15) reflecting the light from at least one of the lighting means (13),
- the light from at least one of the lighting means (13) being reflected, by reason of the inclined faces (14, 15), in the needle arm (11) and its indicating end (12), and
- by reason of the transparency of the needle arm, the light from at least one of the lighting means (13) passes through the needle arm (11) in the zones where the inclined faces (14, 15) are provided, in order to provide indirect illumination of the dial (18).

2. Indicator as claimed in claim 1, wherein a casing flange (5) is provided, on which a protective window (4) is fixed.

3. Indicator as claimed in any one of claims 1 or 2, wherein the lighting means comprise light-emitting diodes (13).
